# EUROPEAN PATENT SPECIFICATION

(11) **EP 3 137 861 B1**
(45) Date of publication and mention of the grant of the patent: **16.02.2022**
(21) Application number: 15785223.7
(22) Date of filing: 30.04.2015
(51) Int. Cl.: G01N 21/03, G01N 21/11, G01N 21/80, G01N 21/85, G01N 15/06, B01L 3/00, B01L 3/02, G01N 21/41, G01N 21/51, G01N 21/64, G01N 21/76, G01N 21/82, G01N 15/00, G01N 35/10

(54) **A DISPOSABLE MEASUREMENT TIP AND METHOD FOR USE THEREOF**
WEGWERFBARE MESSSPITZE UND VERFAHREN ZUR VERWENDUNG DAVON
POINTE DE MESURE JETABLE ET SON PROCÉDÉ D'UTILISATION

(30) Priority: 02.05.2014 GB 201407832
(43) Date of publication of application: 08.03.2017
(73) Proprietor: National University of Singapore, Singapore 119077 (SG)
(72) Inventor: TRAU, Dieter Wilhelm, Singapore 119077 (SG); TAN, Bing Wen, Singapore 688490 (SG)
(74) Representative: Fresh IP
(86) International application number: PCT/SG2015/050090
(87) International publication number: WO 2015/167399

(56) References cited:
- EP-A1- 1 729 137
- US-A- 5 164 598
- US-A1- 2002 127 563
- US-A1- 2010 167 412
- US-A1- 2011 037 980
- US-A1- 2011 170 096
- US-A1- 2013 171 673

## Description

### FIELD OF INVENTION

The present invention relates to a disposable measurement tip for an optical instrument for measuring light absorbance in a sample from a liquid sample, in particular for use with a mobile hand held instrument, particularly but not exclusively, for photometric, luminometric, fluorometric and turbidimetric measurements in liquids. The present invention also relates to a system comprising such a disposable measurement tip and to a method using such a disposable measurement tip.

### BACKGROUND OF THE INVENTION

Photometry is an important analytical method with various applications. Presently photometric apparatus is usually a bench top based instrument. Photometers can generally be divided into two groups, instruments using cuvettes and instruments using an immersable sensor. Cuvette based instruments are usually large desktop instruments or may be smaller portable instruments, although the smaller instruments tend to have reduced functionality. Most instruments which use immersible sensors have a desktop unit connected to the immersible sensor via a light guiding conduit, such as a glass fiber. The sensor is usually made from metal and/or glass. Light originating from the desktop unit is guided through the sensor and passes through a defined length of the sample volume and is then guided back into the desktop unit to a detector. These sensors tend to be large and bulky and generally need to be cleaned before another sample can be tested.

Trau and Orban (DE 101 49 879 A1) describe a handheld photometer using a disposable and immersible sensor tip with a cuvette recess function. In contrast to other instruments, a small part of the optical path is in an integral part of the disposable tip made from polymers. This configuration is able to essentially eliminate sample cross contamination as a new tip is used for each measurement. The tip of DE 101 49 879 A1 however has a number of problems and disadvantages, for example the light still has to travel a long optical path length through the tip material. This can result in low transmission. A further feature of the tip of DE 101 49 879 A1 is that the tip is partly immersed into the measurement solution. The liquid to be analyzed then enters into the optical recess of the tip which is acting as a cuvette. All parts of the hand held photometer are above the meniscus of the measurement solution. The tip of DE 101 49 879 A1 needs a reflective surface such as a metallic surface to reflect light to the detector, adding complexity and cost.

US 2010/0167412 A1 describes a sensor system for determining a concentration of chemical and biological analytes, which comprises: a disposable reagent-carrying pipette tip; a liquid handling unit to which the pipette tip can be detachably mounted, the liquid handling unit capable of withdrawing liquid into the pipette tip; at least one light source; at least one photodetector, the detector capable of generating an electronic signal response indicative of light passed through or generated from the interior space of the pipette tip; and an electronic circuit means for processing, storing and transmitting the electronic signal response and controlling the light source.

A need therefore exists for a disposable photometric measurement tip for use with, for example, a mobile hand held photometer, which tip overcomes at least some of the problems of presently existing devices and methods. In addition, a need exists to make a cost effective simple disposable tip which has minimal cross contamination issues and which is easy to use.

### SUMMARY OF THE INVENTION

The present invention describes a novel measurement tip design based on a tip that contains a particle suspension to scatter light into a detector. The tip design can perform photometric, luminometric, fluorometric, nephleometric and turbidimetric measurements and can form part of a hand-held photometer.

According to one aspect of the present invention there is provided a disposable measurement tip as defined in appended independent claim 1.

The tip of the present invention does not use a recess as a cuvette as described by Trau and Orban. Instead the sample flows into the tip and is mixed with micro-particles in the tip creating a particle suspension in the sample solution located within the tip. Light is then directed towards the micro-particle sample suspension. The light is scattered and reflected by the particles and travels through the sample solution. Some of the light is scattered and reflected back towards the detector within the hand-held photometer. The backscattered and reflected light is then measured and analyzed to perform photometric, luminometric, fluorometric, nephleometric and/or turbidimetric measurements.

According to the present invention light absorbance is measured.

Micro-particles are used in the present invention as "micro mirrors" for reflecting light, instead of using a metallic reflective surface or prism based reflectors. The light may travel a certain distance through the sample solution before the light is scattered back to the detector. This distance may be equivalent to the optical path length in a cuvette-based spectrometer. The volume necessary to achieve a certain optical path length, for example the path length of 10 mm, may have a smaller dimensions than the required path length, for example the volume may be only 2 mm × 2 mm × 2 mm for the 10 mm path length. With the present invention it is possible to "fold" the optical path into a very small volume requiring less space. A very small photometric measurement tip with a large optical path length can be achieved with the present invention. The tip can be made to be disposable to prevent any cross contamination and requires only small amounts of sample volumes. The present invention overcomes a number of limitations by providing a measurement tip based on light scattering rather than on other techniques. No reflective surfaces or other means of guiding the light back into the detector are necessary leading to a drastic cost reduction of the tip. The tip may have a length between 0.5 and 12 centimeters.

The tip may have a diameter between 50 micrometers to 10 millimeters at its filling channel end.

The tip may have a diameter between 1 millimeter and 20 millimeters at the opposite end to the filling channel end.

The tip may have a connector at the opposite end to the filling channel end to connect the tip with photometric device. The connector may be of conical or of another shape.

The filling channel may have a cross section between 1 micrometer square and 3 millimeters square.

The capillary filling channel may have an integrated filter to prevent particles entering the tip and disturbing the measurement.

The tip may comprise a reservoir or cavity containing at least one reagent.

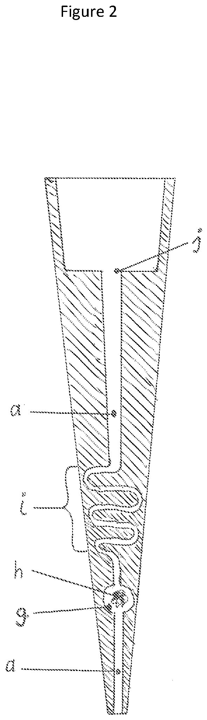

The reservoir or cavity is connected or is part of the capillary filling channel or the reservoir or cavity and the capillary filling channel are the same. A non-limiting example of a cavity is provided in Figure 2.

The tip may comprise a mixing region to mix the sample with a reagent and/or a micro-particle population. A non-limiting example of a mixing region is provided in Figure 2.

The tip may contain a reagent which is mixed with the sample filling up the channels.

The tip is used to measure the absorbance of a sample to be analyzed.

According to a second aspect of the invention there is provided a system as defined in appended claim 13.

The system may be operable to perform photometric or fluorometric or turbidimetric or luminimetric or nephleometric or reflectometric and/or refractive index measurements.

According to a third aspect of the invention there is provided a method as defined in appended independent claim 15. Particular embodiments of the invention are defined in the appended dependent claims.

### DETAILED DESCRIPTION OF THE DRAWINGS

Reference will now be made, by way of example, to the accompanying drawings to provide a better understanding of embodiments of the present invention and should not be interpreted to limitative. The drawing dimensions may not be to scale.
Figure 1a is a longitudinal view of a disposable tip, in accordance with an embodiment of the invention;
Figure 1b is a further longitudinal view of a disposable tip, in accordance with an embodiment of the invention;
Figure 2 is a longitudinal view of a disposable tip, in accordance with an embodiment of the invention;
Figure 3a is a graph of the reflected and scattered light intensity at 600 nm as a function of the high of the sample micro-particle suspension, in accordance with an embodiment of the invention;
Figure 3b is graph showing the spectrum of a chemical at a certain height, in accordance with an embodiment of the present invention;
Figure 4a is a graph showing a number of spectra obtained by using the tip, in accordance with an embodiment of the present invention;
Figure 4b is a graph showing a number of reference spectra obtained using prior art methods;
Figure 5a is a table with the calculated apparent light path length through a sample as a function of particle concentration, in accordance with an embodiment of the present invention;
Figure 5b is a graphical representation of the data from the table in figure 5a, in accordance with an embodiment of the present invention;
Figure 6a is a graph of absorbance ratio versus pH for a sample, in accordance with an embodiment of the present invention; and
Figure 6b is a table showing the results of the measurement of three unknown samples, in accordance with an embodiment of the present invention.

### DETAILED DESCRIPTION OF THE INVENTION

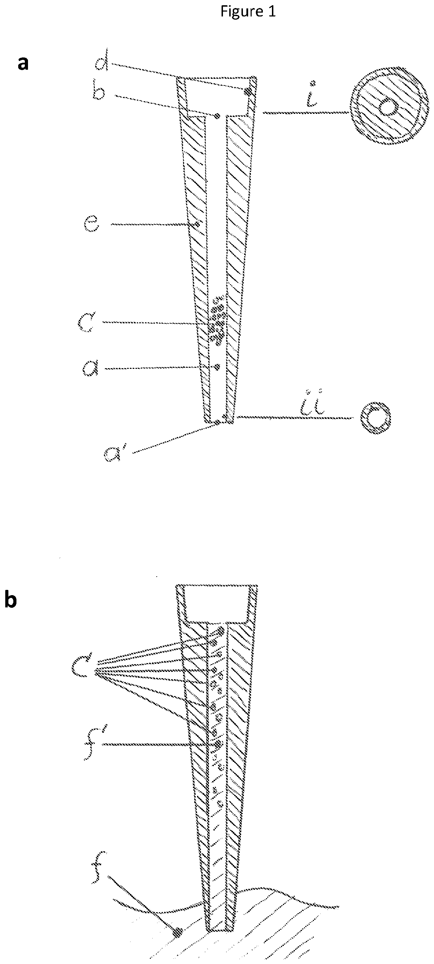

The term "disposable" or "disposable tip" or "photometric measurement tip" or "tip" refers to the tip of an embodiment of the present invention. The tip may be made from a polymer, glass and or any other material which is adapted to work within the appropriate wavelength ranges. Typically the tip may be in the form of a truncated cone with a fluid carrying channel passing through the length thereof. The channel may have an opening at both ends: one opening is for filling the channel and the other opening is for allowing illumination to enter the channel. The tip may have a length between 0.5 and 10 centimeters and a diameter between 50 micrometers and 2 cm. The diameter of the two openings may be different. Typically the opening for filling the channel may have a much smaller diameter or cross section compared with the other opening connected to the photometric device. The filling channel may have a diameter of 1 micrometer to 500 micrometers; the cross section can be round, rectangular or of any other shape. An example of a tip of the present invention is given in Figure 1.

The term "optical coupling end" means the end of the tip which can be connected to an instrument or a photometer device. The coupling or connection to a photometer device may be achieved by a mechanic coupling such as a conical shape or other shape which matches of the tip at the optical coupling end. Alternatively, other couplings can equally easily be imagined and used

The term "filling channel" means a channel within the tip. The filling channel is filled with the sample when the tip comes in contact with the sample solution. The sample flows into the filling channel by capillary action or, in examples which do not fall within the scope of the present invention, a pressure difference or using a plunger or other means to cause the fluid to enter into the channel at the first end. The capillary filling channel contains a population of micro-particles. The capillary filling channel may contain means to condition the sample such as a filter or a reagent release container containing a reagent or a mixing zone.

The term "micro-particle population" or "micro-particles" or "micro-beads" means a number of micro-particles or micro-beads located within the filling channel. The micro-particles or micro-beads are deposited within the filling channel as a solid, powder, as a suspension and or any other form. At the time the sample solution is drawn into the filling channel the micro-particles or micro-beads are suspended within the sample forming a suspension. The micro-particles may be organic or inorganic. The micro-particles may have a diameter from 10 nanometers to 500 micrometers. The micro-particles may be spherical or non-spherical in shape. Possible examples of micro-particles are polystyrene micro-particles, melamine micro-particles, silicon dioxide micro-particles, titanium dioxide micro-particles, metallic micro-particles. The micro-particles may or may not carry a reagent.

When the micro-particles are in suspension with the sample each particle acts as a micro-mirror reflecting or scattering the illumination impinging thereon. The direction of reflection or scattering will depend on the orientation of the micro-particles in the suspension. At least some of the reflected or scattered illumination will be detected by a detector and used for the photometric measurement technique. By using the principle of light scattering and reflection by micro-particles suspended in the sample solution the disposable tip of an embodiment of the present invention does not need metallic reflective surfaces or optical components such as lenses, waveguides or prisms to reflect the light back into the detector and therefore can be manufactured at a very low price.

The term "reagent" means a substance used in analytical methods and measurements. Typically the reagent interacts with the sample to generate a characteristic signal. Often the characteristic signal is an optical signal. Typically the reagent is selective to detect a single analyte or a group of analytes. In an embodiment of the present invention a reagent can be deposited within the tip; either in a dedicated reservoir or within the filling channel. The micro-particles may carry a reagent; either absorbed or covalently linked to the surface of the micro-particles. More than one reagent may be deposited or present on the micro-particles. Example 2 (as described below) provides data on a pH sensitive reagent to determine the pH value of a sample. Possible examples of reagents for this example may include pH sensitive dyes to measure pH, chelating reagents to measure metal ions, enzymes to measure substrates, mixtures of enzymes and dyes for example glucose oxidase and peroxidase and/or an electron acceptor dye to measure glucose, antibodies to detect an antigen, NADH or NAD+ to measure redox reactions, organic dyes, etc.

The term "measurement" means the process of using the tip and the attached photometric device to analyze and determine the concentration of an analyte in the sample.

The term "hand held photometric device" or "personal photometer" or "instrument" means a mobile or stationary device containing at least one light source and at least one light detector, in which the light source is adapted to illuminate the sample and the detector is adapted to collect backscattered illumination from the micro-particles. In one embodiment the illumination enters and is detected through the second opening as described above. The detected illumination is used to perform photometric measurements. The illumination source and detector may be located at different locations depending on the shape, tip and orientation of the illumination source and the sample, etc.

The term "analyte" means the species to be analyzed in the sample by performing a measurement, typically a chemical compound such as, but not limited to, proteins, peptides, nucleic acids, lipids, dextran, gases, metabolites such as but not limited to glucose, bilirubin or a biological compound such as but not limited to microorganism, virus, cells or a biomarker or a pH value or tubidimetry or nephleometry or a color or a mixture thereof.

The term "cuvette" means a transparent container to hold a sample for a photometric/spectrometric measurement. Classical cuvettes are made from glass or polymers. In Trau and Orban the cuvette is an optical recess filled with the sample. In the present invention the cuvette is a channel filled with the sample.

Figure 1a shows a tip in accordance with an embodiment of the present invention before is has come in contact with a sample. The tip includes a filling channel (a) having at one end a first opening for filling the channel (a') and at the other end a second opening to illuminate with light (b). The filling channel include a deposit of micro-particles within the filling channel (c) and having an attachment point or cone (d) to connect the tip with a photometric device (not shown). The tip body (e) is typically made from a polymer, glass and or any other material. The cross section (i) depicts the tip body with the filling channel at the light illumination end (second opening). The cross section (ii) depicts the opening of the filling channel end (first opening). The tip shown in figure 1 is the simplest variation and should not be interpreted to limit the present invention. The scope of the invention is solely limited by the appended claims.

The tip is shown as an elongate tube having walls surrounding the central filling channel. The walls are shown as having variable thickness along the length thereof, as is also seen in the cross-sectional views at (i) and (ii). The filling channel is also in the form of a tube, which can have variable diameters along its length or be of substantially the same diameter throughout. The tip is not limited to the shapes and orientations shown in the drawings and may be a different shape, have different cross-sectional shape and be formed in any way. Examples of shapes may be cylindrical, conical shape with round or rectangular cross section in any aspect ratio that is appropriate for the analysis to be performed or to the sample in question.

In Figure 1b the tip is shown after coming in contact with a sample. The tip is inserted into a liquid sample (f) and a sample (f) enters the filling channel through the first opening. The micro-particles (c) are then dispersed in the sample (f) by any appropriate mixing process or by diffusion or by convection or mixtures thereof.

Figure 2 shows a further design of a tip, in accordance with an embodiment of the present invention, with a reservoir for additional reagents to realize a so called "Lab-in-a-Tip" design. In addition to the elements of the tip of Figure 1, the tip design of Figure 2 contains a reservoir or cavity (g) to hold reagents (h) and optionally a mixer (i) to mix the reagent with the sample. In a simplified design the filling channel (a) may act as a reservoir or cavity to hold a reagent or several reagents. Also shown is the opening (j) to illuminate the filled sample with light from an instrument, such as a spectrometer. The mixer may also fulfill the function of a reactor for a reaction between the sample and the reagent.

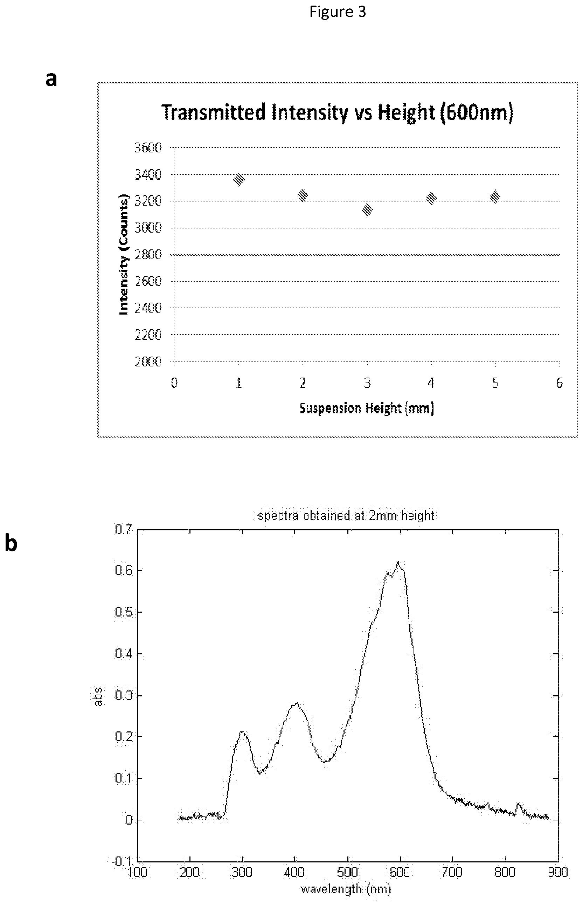

Figure 3a shows a graph of the reflected and scattered light intensity at 600 nm, as a function of the height of the sample micro-particle suspension. The sample is represented as a cylindrical volume having a 3 millimeter diameter, with variations in height from 1 to 5 mm. It can be observed that the sample suspension height has little effect on the quantity of light reaching the detector.

Figure 3b shows the spectrum of Thymolphthalein at a concentration of 0.0001M recorded at a 2 mm sample height. The spectrum is similar to the reference spectrum.

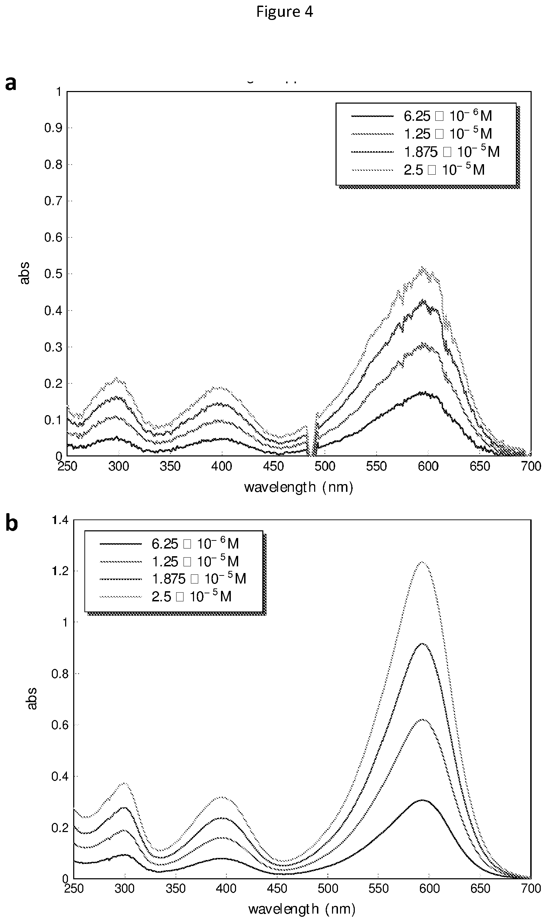

Figure 4a shows several spectra of Thymolphthalein at concentrations of 0.625/1.25/1.88/2.50 × 10-5 M obtained using an embodiment of the present invention with micro-particles of Polystyrene Particles of 1 micrometer diameter and a concentration of 0.0131wt. %. The reference spectrum in figure 4b was obtained with a research grade bench-top spectrophotometer (Shimadzu Corporation, Japan). From the results it is clear that embodiments of the present invention produce results that are similar to the reference spectrum.

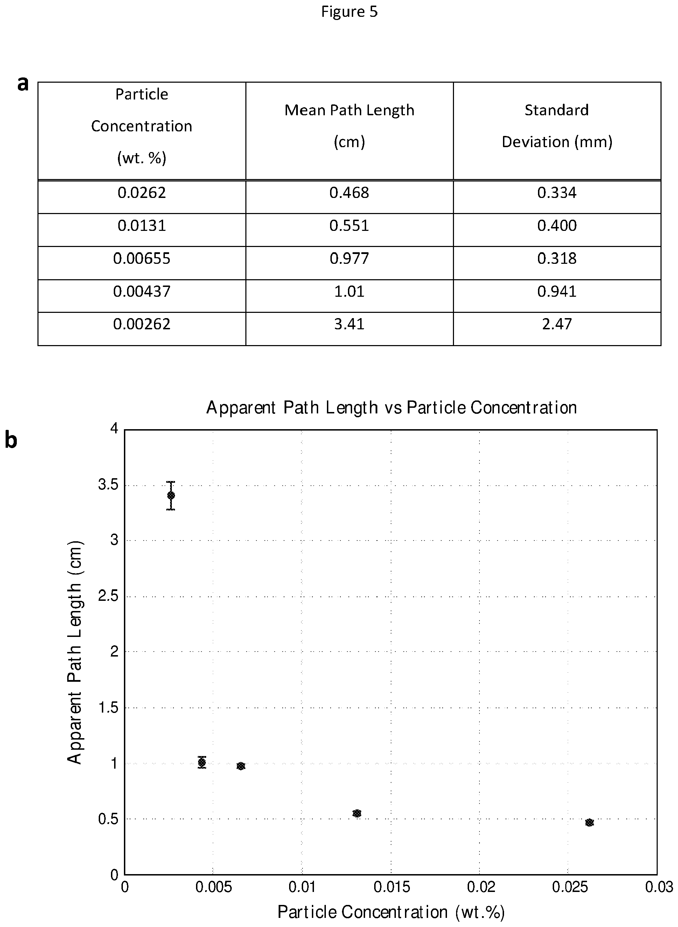

Figure 5a shows a table with the calculated apparent light path length through a sample as a function of particle concentration and Figure 5b is a graphical representation of the data from the table in figure 5a.

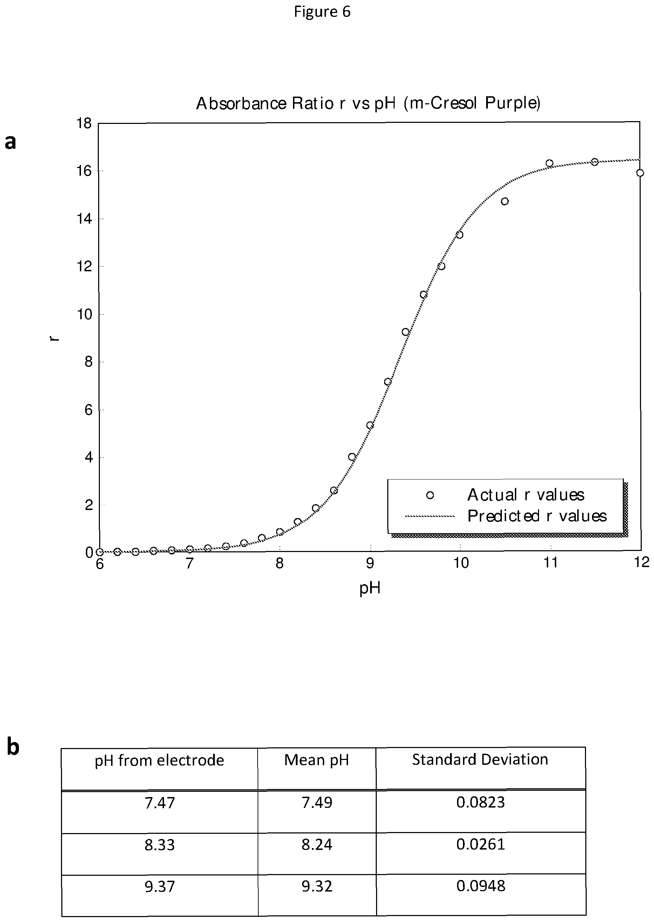

Figure 6a shows a pH measurement approach using the "Lab-in-a-Tip" concept, as shown in figure 2. M-Cresol Purple was used as a reagent to determine the pH of a sample. The figure depicts the peak ratios (r) at the wavelength of 434 nm/578 nm as a function of the pH. The pH of an unknown sample can be calculated from the "r" values. The table of figure 6b shows the results of the measurement of 3 unknown samples using an embodiment of the present invention. The values are compared with a measurement using a pH electrode as a benchmark. It can be seen that an accuracy of better than 0.1 pH value is achieved.

In use, the tip is connected to a light source and a light detector which are part of a photometric device; preferentially the photometric device is a hand held photometer. The tip is immersed into a liquid sample and the filling channel is filled with the sample. The micro-particles pre-deposited within the filling channel will be dispersed in the sample to form a suspension. Light from the light source is coupled into the tip to illuminate the particle suspension in the filling channel. The light enters the sample and is reflected and/or scattered by the micro-particles. The light travels along a certain path through the sample and some is eventually reflected and scattered back to the sensor. Different light rays travel a different path length through the sample. For all light rays that reach the detector an apparent path length is measured and is shown in Figure 3 as described above. The absorbance of the sample can now be measured to analyze the sample. The optical path length is dependent on the particle concentration as shown in Figure 4.

Because the light is propagating by multiple reflections and scattering within the particle suspension a long optical path length can be achieved within a relatively small sample volume an within a small measurement tip. The realization of such a long apparent path length within a small measurement tip solves several problems of current technology.

The apparent path length can be determined by a calibration with a substance of known concentration and absorbance coefficient using the Lambert Beer Law. Tips of the same design can then be used with the corresponding calibration factor. Typically with absorbance measurements a large number of different analytes can be quantitatively measured. For example absorbance measurements at 260 nm are used to measure proteins, absorbance measurements at 280 nm are used to measure nucleic acids such as DNA, RNA and oligonucleotides. Absorbance measurements at around 600-700 nm are used to measure particle concentrations. In this case more light is scattered.

It will be appreciated that the term light in this disclosure is not limited to the visible spectrum but may include radiation of different wavelengths as is appropriate for the analytical techniques being employed, for example UV and IR. For certain wavelengths the tip may need to be made of specific material to avoid any absorptions or reflections which may cause anomalies in the measurements.

The measurement tip may be manufactured in a simple way at very low cost. By fully utilizing the novel concept of an embodiment of the present invention spectrometer/photometer devices may become generally available for a large user group and may become a commodity.

By employing an embodiment of the present invention a "Lab-in-a-Tip" is realized to precondition a sample and analyze a sample. For preconditioning a sample, several features may be incorporated into the tip, such as:
1) The filling channel may have an integrated filter to prevent particles entering the tip and disturbing the measurement.
2) The filling channel may contain an absorbent substance. While filling the tip with the sample, the sample comes in contact with the absorbent substance, which can absorb any unwanted or interfering substances from the sample.

To measure an analyte in a sample several features may be incorporated into the tip, such as:
1) Mixing the sample with micro-particles to reflect light through the sample for a photometric measurement.
2) Releasing at least one reagent to generate a signal.

In another embodiment of the present invention the micro-particles may be deposited in the filling channel or in a reservoir by using a matrix material. The matrix material acts as a water soluble glue to fix the micro-particles. When the tip comes in contact with the sample, typically an aqueous sample, the matrix material dissolves releasing the micro-particles into the sample solution to form a suspension. The matrix may be a carbohydrate such as dextran or glucose or sucrose or an alginate or a synthetic polymer such as polyethylene glycol or acrylamide. In addition, the matrix material may also contain a reagent. Similar to the micro-particles, the reagent may be released into the sample by dissolving the matrix material. The matrix material may first be dissolved in water and then micro-particles and optionally reagents may be added. Then an aliquot of the matrix material, micro-particle, and reagent mixture may be pipetted into the filling channel or a reservoir and dried. Using this process a pre-determined quantity of micro-particles and reagent is deposited in every manufactured tip.

In another embodiment of the present invention the filling channel is coated with a reflective surface, typically but not limited to a metallic reflective surface to reflect or scatter more light back into the suspension and into the light detector.

In another embodiment of the present invention the tip has a conical shape at its optical illumination end, also termed optical coupling end, to attach the tip to a photometric device. The conical shape may also adjust the positions of the tip with the optical components of the photometric device. Shapes other than conical may be used to achieve the alignment; such other shapes may use a notch or mechanical features to achieve alignment and attachment. The photometer device contains at least one light source and at least one light detector. The light source can be a LED, a xenon lamp, a halogen lamp, a deuterium lamp or other means of illumination. The light detector can be a photodiode, a spectrometer, a camera or other means to detect light intensity.

The wavelength to be measure may depend on having a separate light source for every wavelength and switching on the light source to produce a particular wavelength. A separate light detector or a spectrometer may be used to read out the illumination at an appropriate wavelength. In one embodiment a tunable light source and detector may be used.

The tip and photometric system of an embodiment of the present invention may be used with a minimal sample volume. With channels in the micrometer range the required sample volume may be less than 1 microliter. One of the novel features of the tip is the filling channel. By dipping the tip into a sample the entire filling channel may be filled with sample by capillary action or other means of causing a sample to flow. To fill the channels a small drop of sample can be used. The tip and system can be used during an operation on a patient, to fill the tip with blood or other body fluids for measurements of species such as oxygen, glucose or biomarkers.

In another embodiment of the present invention the tip is used for turbidimetric or nephleometric measurements in liquids. Any dispersed colloidal system will scatter light and a certain fraction of this scattered light may be reflected and scattered back to the detector. For this application the initial micro-particle concentration may be reduced or, in an example which does not fall within the scope of the claimed invention, no micro-particles are pre-filled. Using this principle a sample with colloidal particles or cells will increase the light intensity measured with the detector.

In another embodiment of the present invention the tip has a coating or shielding to prevent ambient light reaching the filling channel. The coating or shielding can be applied onto the outer surface of the tip, at the inner surface of the filling channel and/or within the tip material.

In another embodiment of the present invention the tip is made from a non-transparent material to prevent ambient light reaching the filling channel.

In another embodiment of the present invention the tip channel may contain a reagent which is mixed with the sample at the time the tip is used and the filling channel is filled up with sample. The tip may contain a reservoir cavity containing the reagent. The reservoir cavity may be connected to the filling channel. The cavity may also contain micro-particles. The reagent may undergo a reaction with an analyte in the sample. Typically a color may be formed during the reaction to permit colorimetric or photometric analysis of the analyte. In this embodiment the filling channel may contain a mixing region to mix the reagent with the sample. The micro-particles may be also deposited within the reservoir. The reagent may be a dye, a fluorophore, an enzyme, an antibody, a chelating reagent, a metal indicator, a pH indicator, an oxidant, a reducing agent, a buffer, an adsorbent or ion exchanger to remove a chemical species from the liquid sample or mixtures thereof, etc. Alternatively the reagent can be premixed with the liquid sample. An example of this embodiment is the use of a pH sensitive dye or fluorophores as a reagent. While filling the channel with sample the pH sensitive dye will exhibit a color or fluorescence as a function of the pH value of the sample. By measuring the color/fluorescence or the ratio of more than one color/fluorescence values to each other the pH value of the sample can be determined. Examples for pH sensitive dyes are phenolphthalein, fluorescein, 7-Hydroxycoumarin-3-carboxylic acid, rhodamine, m-cresol purple, 4-(9-diethylamino-5H-7-oxa-4b,6,13-triaza-indeno [2,1-a] anthracen-5-yl)-2-methoxy-6-nitro-phenol (ACIB) and their derivatives.

In another embodiment of the present invention the channels within the tip may contain a flow restrictor and/or a capillary pump to control the flow speed of capillary filling. The flow restrictor is used to control the flow speed or to stop the flow. The capillary pump is used to create larger capillary pressure to fill channels or cavities of the tip.

The tip can be used after the measurement to store the sample for future analysis. This is possible because the thin channel will not allow the sample to evaporate.

The tip of the present invention solves several problems which are associated with photometry and overcomes a number of limitations with prior art systems and methods, these may include:
1) The tip requires no metallic reflective surfaces or optical components such as lenses or prisms to guide the light and therefore can be manufactured at a very low cost.
2) Cross contamination between samples is virtually impossible.
3) Extremely small sample volumes can be measured.
4) The sample can be sucked into the tip from a droplet or another source and the tip is removed from the sample source for measurement.
5) The tip can be used to store a sample aliquot after an initial measurement for future analysis.
6) The tip can be made to be very small and thin to access all type of reaction tubes found in laboratories or other sample sources.
7) Small amounts of tip material, such as polymers or glass, are required, therefore reducing the cost of the tip.
8) Tips can be used to measure different analytes and parameters.
9) A reaction with a reagent incorporated into the tip can be performed to analyze various chemical species to realize a Lab-in-a-Tip.
10) The tip and photometric device can be hand held for lab, bench or environmental measurements.

The tip is intended to be used in conjunction with a photometric instruments for photometric measurements. However, it will be appreciated the tip of the present invention may be used in association with other types of instruments, in the lab, in the medical environments, in agriculture, in veterinarian medicine or at production, manufacturing sites.

The tip can be used to measure any chemical, physiological, biological, physical and/or other type of parameter of a sample. As previously mentioned the parameter may include the concentration of an analyte, pH, turbidity, photometric qualities, fluorometric qualities, luminimetric qualities, nephleometric qualities, reflected light intensity, particle/cell count, density measurements, refractive index measurements and/or any other appropriate quality.

### EXAMPLES

The following examples are provided for the better understanding of the present invention and should not be interpreted to be limitative in any way.
Example 1: This is an example for an absorbance measurement using an embodiment of the tip and the method of the present invention. The sample is a solution of the dye Thymolphthalein dissolved in alkaline water. A white light source (Xenon flash lamp) may be used to illuminate the sample/micro-particle suspension. The back reflected and backscattered light was measured with a spectrophotometer (Ocean Optics, USA). The spectrum obtained with the method and tip of the present invention is depicted in Figure 4a. The concentration of the dye sample can be calculated from the spectral absorbance data of the spectrum. To demonstrate the performance of the method of the present invention a reference spectrum of the same analyte is provided in Figure 4b.
Example 2: This is an example for the "Lab-in-a-Tip" design of an embodiment of the present invention. A reservoir within the tip contained the pH indicator dye m-Cresol Purple as a reagent. During the filling of the tip the pH indicator dye and the micro-particles are mixed with the sample. Then the absorbance at the peak wavelength of m-Cresol Purple λ1 = 578 nm and λ2 = 434 nm corresponding to the absorbance maxima of the HIn-and H2In forms of m-Cresol Purple respectively are measured and the pH is calculated from the absorbance peak ratios. Figure 6a depicts the calibration curve of the absorbance peak ratios (r) for m-Cresol Purple as a function of the pH of a sample. For m-Cresol Purple as a reagent a pH measurement in the range of 8 to 12 can be performed. The table in figure 6b shows the results of the measurement of 3 unknown samples using the method of the present invention and the calibration curve shown in Figure 6a. The values are compared with a measurement using a pH electrode as a benchmark. It can be seen that an accuracy of better than 0.1 pH value is achieved in this example. To extend the pH range into the neutral and acidic pH range other dyes or mixtures of pH sensitive dyes may be used. By pre-depositing such mixtures of dyes within the filling channel photometric measurement tips for dedicated pH ranges can be manufactures. In addition to pH many other parameters could be measured with a "Lab-in-a-Tip" approach.

## Claims

1. A disposable measurement tip for an optical instrument for measuring light absorbance in a sample (f') from a liquid sample (f), the disposable measurement tip comprising;
i) a tip body (e);
ii) a capillary filling channel (a) in the tip body (e) for holding the sample (f') to be analyzed and having an opening (a') on one end of the tip body (e) to receive the sample (f') to be analyzed;
iii) a population of micro-particles (c) pre-deposited within the capillary filling channel (a) and which can be suspended within the sample (f') to be analyzed when the sample (f') to be analyzed is received in the capillary filling channel (a) by capillary force;
iv) an attachment point (d) for an optical instrument on the other end of the tip body (e), wherein in use the sample (f') to be analyzed in the tip is illuminated by the optical instrument from the attachment point (d) and the illumination impinges on the micro-particles (c) whereby the illumination is reflected by the micro-particles (c) several times such that the light travels a distance through the sample (f') to be analyzed, to be absorbed by the sample (f') to be analyzed, before the light is reflected back to the attachment point (d) for detection by the optical instrument and to thereby enable the measurement of light absorbance.

2. A disposable measurement tip according to claim 1, wherein the capillary filling channel (a) is elongate and has an opening (a', b) in each end, wherein one opening (a') in the capillary filling channel (a) is for filling the capillary filling channel (a) and other opening (b) provides the attachment point (d) comprising an optical coupling end for receiving illumination from an illumination source of the optical instrument and for connecting to a detector 1 of the optical instrument for receiving the illumination directed back from the micro-particles (c).

3. A disposable measurement tip according claim 2, wherein the disposable measurement tip has a diameter
between 1 millimeter and 30 millimeters at its optical coupling end, a diameter of between 50 micrometers and 10 millimeters at the opening (a') at the other filling end, for receiving the sample (f') to be analyzed and is between 0.5 and 10 centimeters in length.

4. A disposable measurement tip according to any one of the preceding claims, wherein the micro-particles of the population of micro-particles (c) may be at least one of organic compound micro-particles such as polystyrene micro-particles, melamine micro-particles and an inorganic compound micro-particles such as metal, gold, ceramic, glass, silicon dioxide or titanium dioxide micro-particles.

5. A disposable measurement tip according to any one of the preceding claims, wherein the micro-particles of the population of micro-particles (c) have a diameter of between 10 nanometers and 500 micrometer.

6. A disposable measurement tip according to any one of the preceding claims, wherein the disposable measurement tip is made from a polymer or glass.

7. A disposable measurement tip according to any one of the preceding claims, wherein the cross section of the filling channel (a) changes over the length of the filling channel (a), preferably
wherein the filling channel (a) has an integrated filter to prevent particles entering the disposable measurement tip and disturbing the measurement.

8. A disposable measurement tip according to any one of the preceding claims wherein the tip comprises a reservoir or cavity (g) and wherein the reservoir or cavity (g) is connected to the capillary filling channel (a), preferably wherein the reservoir or cavity (g) further contains at least one reagent (h), more preferably wherein the reservoir or cavity (g) and the capillary filling channel (a) are the same and the capillary filling channel (a) includes the at least one reagent (h).

9. A disposable measurement tip according to any one of the preceding claims wherein the micro-particle population (c) carries at least one reagent.

10. A disposable measurement tip according to any one of the preceding claims wherein the disposable measurement tip contains a mixing region (i).

11. A disposable measurement tip according to any one of the preceding claims wherein the disposable measurement tip includes at least one prism and/or at least one reflective surface to guide the light back to the detector of the optical instrument.

12. A disposable measurement tip according to any one of the preceding claims wherein the optical instrument is adapted to measure the fluorescence of the sample (f') or the luminescence of the sample (f).

13. A system for measuring light absorbance in sample (f') from a liquid sample (f), the system comprising:
a disposable measurement tip according to any one of the preceding claims;
an optical instrument including an illumination source connected to the disposable measurement tip to
illuminate the sample (f'); and
a light detector connected to the disposable measurement tip for detecting illumination reflected back by the micro-particles (c).

14. A system according to claim 13, the system being operable to perform at least one of photometric, fluorometric, turbidimetric, nephleometric, luminimetric, and refractive index measurements.

15. A method of performing light absorbance measurements in a sample (f') from a liquid sample (f) using the system of either claim 13 or claim 14, the method comprising the steps of:
introducing a sample (f') from a liquid sample (f) into the capillary filling channel (a) and forming a micro-particle suspension with the population of micro-particles (c) deposited within the capillary filling channel (a) by capillary force,
illuminating the capillary filling channel (a) by the optical instrument from the attachment point (d); and
detecting illumination reflected back from the micro-particles (c) with the detector of the optical instrument.

## Patentansprüche

1. Einwegmessspitze für ein optisches Gerät zur Messung der Lichtabsorption in einer Probe (f') von einer Flüssigkeitsprobe (f), wobei die Einwegmessspitze umfasst:
i) einen Spitzenkörper (e);
ii) einen Kapillarfüllkanal (a) im Spitzenkörper (e) zum Aufbewahren der zu analysierenden Probe (f') und eine Öffnung (a') an einem Ende des Spitzenkörpers (e) aufweisend, um die zu analysierende Probe (f') aufzunehmen;
iii) eine Population von Mikropartikeln (c), die zuvor innerhalb des Kapillarfüllkanals (a) abgelagert wurden und die innerhalb der zu analysierenden Probe (f') suspendiert werden können, wenn die zu analysierende Probe (f') durch Kapillarkraft im Kapillarfüllkanal (a) aufgenommen wird;
iv) einen Befestigungspunkt (d) für ein optisches Gerät am anderen Ende des Spitzenkörpers (e), wobei die zu analysierende Probe (f') in der Spitze im Gebrauch durch das optische Gerät von dem Befestigungspunkt (d) beleuchtet wird und die Beleuchtung auf die Mikropartikel (c) auftrifft, wodurch die Beleuchtung von den Mikropartikeln (c) mehrmals reflektiert wird, so dass das Licht sich eine Strecke durch die zu analysierende Probe (f') bewegt, um von der zu analysierenden Probe (f') absorbiert zu werden, bevor das Licht zurück zum Befestigungspunkt (d) zur Erfassung durch das optische Gerät reflektiert wird, und um dadurch die Messung der Lichtabsorption zu ermöglichen.

2. Einwegmessspitze nach Anspruch 1, wobei der Kapillarfüllkanal (a) länglich ist und eine Öffnung (a', b) in jedem Ende aufweist, wobei eine Öffnung (a') im Kapillarfüllkanal (a) zum Füllen des Kapillarfüllkanals (a) ist und die andere Öffnung (b) den Befestigungspunkt (d) bereitstellt, umfassend ein optisches Kopplungsende zum Aufnehmen von Beleuchtung von einer Beleuchtungsquelle des optischen Geräts und zum Anschließen an einen Detektor des optischen Geräts zum Aufnehmen der Beleuchtung, die von den Mikropartikeln (c) zurück geleitet wird.

3. Einwegmessspitze nach Anspruch 2, wobei die Einwegmessspitze an ihrem optischen Kopplungsende einen Durchmesser zwischen 1 Millimeter und 30 Millimeter und an der Öffnung (a') am anderen Füllende zum Aufnehmen der zu analysierenden Probe (f') einen Durchmesser zwischen 50 Mikrometer und 10 Millimeter aufweist und zwischen 0,5 und 10 Zentimeter lang ist.

4. Einwegmessspitze nach einem der vorhergehenden Ansprüche, wobei die Mikropartikel der Population von Mikropartikeln (c) mindestens eines von organischen Verbindungsmikropartikeln, wie Polystyrolmikropartikel, und anorganischen Verbindungsmikropartikeln, wie Metall- , Gold-, Keramik-, Glas-, Siliciumdioxid- oder Titandioxidmikropartikel, sein können.

5. Einwegmessspitze nach einem der vorhergehenden Ansprüche, wobei die Mikropartikel der Population von Mikropartikeln (c) einen Durchmesser zwischen 10 Nanometer und 500 Mikrometer aufweisen.

6. Einwegmessspitze nach einem der vorhergehenden Ansprüche, wobei die Einwegmessspitze aus einem Polymer oder Glas hergestellt ist.

7. Einwegmessspitze nach einem der vorhergehenden Ansprüche, wobei der Querschnitt des Füllkanals (a) sich über die Länge des Füllkanals (a) ändert, vorzugsweise wobei der Füllkanal (a) einen integrierten Filter aufweist, um zu verhindern, dass Partikel in die Einwegmessspitze eindringen und die Messung stören.

8. Einwegmessspitze nach einem der vorhergehenden Ansprüche, wobei die Spitze ein Reservoir oder eine Aussparung (g) umfasst und wobei das Reservoir oder die Aussparung (g) mit dem Kapillarfüllkanal (a) verbunden ist, vorzugsweise wobei das Reservoir oder die Aussparung (g) weiterhin mindestens ein Reagens (h) enthält, mehr bevorzugt wobei das Reservoir oder die Aussparung (g) und der Kapillarfüllkanal (a) ein und dasselbe sind und der Kapillarfüllkanal (a) das mindestens eine Reagens (h) beinhaltet.

9. Einwegmessspitze nach einem der vorhergehenden Ansprüche, wobei die Mikropartikelpopulation (c) mindestens ein Reagens trägt.

10. Einwegmessspitze nach einem der vorhergehenden Ansprüche, wobei die Einwegmessspitze eine Mischregion (i) enthält.

11. Einwegmessspitze nach einem der vorhergehenden Ansprüche, wobei die Einwegmessspitze mindestens ein Prisma und/oder mindestens eine reflektierende Oberfläche zum Leiten des Lichts zurück zum Detektor des optischen Geräts beinhaltet.

12. Einwegmessspitze nach einem der vorhergehenden Ansprüche, wobei das optische Gerät dazu eingerichtet ist, die Fluoreszenz der Probe (f') oder die Lumineszenz der Probe (f') zu messen.

13. System zur Messung der Lichtabsorption in einer Probe (f') von einer Flüssigkeitsprobe (f), wobei das System umfasst:
eine Einwegmessspitze nach einem der vorhergehenden Ansprüche;
ein optisches Gerät, beinhaltend eine Beleuchtungsquelle, die mit der Einwegmessspitze verbunden ist, um die Probe (f') zu beleuchten; und
einen Lichtdetektor, der mit der Einwegmessspitze verbunden ist, zur Erfassung von Beleuchtung, die von den Mikropartikeln (c) zurück reflektiert wird.

14. System nach Anspruch 13, wobei das System dazu betreibbar ist, mindestens eine von einer photometrischen, fluorimetrischen, turbidimetrischen, nephelometrischen, luminometrischen und Brechungsindexmessung durchzuführen.

15. Verfahren zur Durchführung von Lichtabsorptionsmessungen in einer Probe (f') von einer Flüssigkeitsprobe (f) unter Verwendung des Systems nach entweder Anspruch 13 oder Anspruch 14, wobei das Verfahren die Schritte umfasst:
Einbringen einer Probe (f') von einer Flüssigkeitsprobe (f) in den Kapillarfüllkanal (a) und Bilden einer Mikropartikelsuspension mit der Population von Mikropartikeln (c), die durch Kapillarkraft innerhalb des Kapillarfüllkanals (a) abgelagert wurden,
Beleuchten des Kapillarfüllkanals (a) durch das optische Gerät von dem Befestigungspunkt (d) und
Erfassen von Beleuchtung, die von den Mikropartikeln (c) zurück reflektiert wird, mit dem Detektor des optischen Geräts.

## Revendications

1. Une pointe de mesure jetable pour un instrument optique permettant de mesurer l'absorbance de lumière dans un échantillon (f) à partir d'un échantillon liquide (f), la pointe de mesure jetable comprenant :
i) un corps de pointe (e) ;
ii) un canal de remplissage capillaire (a) dans le corps de pointe (e) pour contenir l'échantillon (f) à analyser et ayant une ouverture (a') sur une des extrémités du corps de pointe (e) pour recevoir l'échantillon (f) à analyser ;
iii) une population de microparticules (c) préalablement déposées à l'intérieur du canal de remplissage capillaire (a) et qui peuvent être suspendues à l'intérieur de l'échantillon (f) à analyser quand l'échantillon (f) à analyser est reçu dans le canal de remplissage capillaire (a) par une force capillaire ;
iv) un point de fixation (d) pour un instrument optique sur l'autre extrémité du corps de pointe (e), dans laquelle, lors de l'utilisation, l'échantillon (f) à analyser dans la pointe est éclairé par l'instrument optique à partir du point de fixation (d) et l'éclairage est incident sur les microparticules (c) grâce à quoi l'éclairage est réfléchi par les microparticules (c) plusieurs fois de telle sorte que la lumière parcourt une distance à travers l'échantillon (f) à analyser, pour être absorbée par l'échantillon (f) à analyser, avant que la lumière ne soit réfléchie de nouveau vers le point de fixation (d) pour une détection par l'instrument optique et donc, pour permettre la mesure de d'absorbance de lumière.

2. Une pointe de mesure jetable selon la revendication 1, dans laquelle le canal de remplissage capillaire (a) est allongé et a une ouverture (a', b) dans chaque extrémité, dans laquelle une des ouvertures (a') dans le canal de remplissage capillaire (a) est conçue pour remplir le canal de remplissage capillaire (a) et l'autre ouverture (b) fournit le point de fixation (d) comprenant une extrémité d'accouplement optique pour recevoir un éclairage provenant d'une source d'éclairage de l'instrument optique et pour se connecter à un détecteur de l'instrument optique pour recevoir l'éclairage renvoyé par les microparticules (c).

3. Une pointe de mesure jetable selon la revendication 2, dans laquelle la pointe de mesure jetable a un diamètre compris entre 1 millimètre et 30 millimètres à son extrémité d'accouplement optique, un diamètre compris entre 50 micromètres et 10 millimètres à l'ouverture (a') à l'autre extrémité de remplissage, afin de recevoir l'échantillon (f) à analyser et qui fait entre 0,5 et 10 centimètres de long.

4. Une pointe de mesure jetable selon l'une quelconque des revendications précédentes, dans laquelle les microparticules de la population de microparticules (c) peuvent être soit des microparticules de composé organique telles que des microparticules de polystyrène, des microparticules de mélamine, soit des microparticules de composé inorganique telles que des microparticules de métal, d'or, de céramique, de verre, de dioxyde de silicium ou de dioxyde de titane.

5. Une pointe de mesure jetable selon l'une quelconque des revendications précédentes, dans laquelle les microparticules de la population de microparticules (c) ont un diamètre compris entre 10 nanomètres et 500 micromètres.

6. Une pointe de mesure jetable selon l'une quelconque des revendications précédentes, dans laquelle la pointe de mesure jetable est fabriquée en polymère ou en verre.

7. Une pointe de mesure jetable selon l'une quelconque des revendications précédentes, dans laquelle la section transversale du canal de remplissage (a) change sur longueur du canal de remplissage (a), de préférence dans laquelle le canal de remplissage (a) a un filtre intégré pour empêcher aux particules de pénétrer dans la pointe de mesure jetable et de perturber la prise de mesure.

8. Une pointe de mesure jetable selon l'une quelconque des revendications précédentes, dans laquelle la pointe comprend un réservoir ou une cavité (g) et dans laquelle le réservoir ou la cavité (g) est connecté au canal de remplissage capillaire (a), de préférence dans laquelle le réservoir ou la cavité (g) contient en outre un ou plusieurs réactifs (h), plus préférablement dans laquelle le réservoir ou la cavité (g) et le canal de remplissage capillaire (a) sont les mêmes et le canal de remplissage capillaire (a) inclut le ou les réactifs (h).

9. Une pointe de mesure jetable selon l'une quelconque des revendications précédentes, dans laquelle la population de microparticules (c) transporte le ou les réactifs.

10. Une pointe de mesure jetable selon l'une quelconque des revendications précédentes, dans laquelle la pointe de mesure jetable contient une région de mélange (i).

11. Une pointe de mesure jetable selon l'une quelconque des revendications précédentes, dans laquelle la pointe de mesure jetable inclut au moins un prisme et/ou au moins une surface réfléchissante pour guider la lumière vers le détecteur de l'instrument optique.

12. Une pointe de mesure jetable selon l'une quelconque des revendications précédentes, dans laquelle l'instrument optique est adapté pour mesurer la fluorescence de l'échantillon (f) ou la luminescence de l'échantillon (f).

13. Un système permettant de mesurer d'absorbance de lumière dans un échantillon (f) à partir d'un échantillon liquide (f), le système comprenant :
une pointe de mesure jetable selon l'une quelconque des revendications précédentes ;
un instrument optique incluant une source d'éclairage connectée à la pointe de mesure jetable pour éclairer l'échantillon (f) ; et
un détecteur de lumière connecté à la pointe de mesure jetable pour détecter l'éclairage réfléchi de nouveau par les microparticules (c).

14. Un système selon la revendication 13, le système pouvant être utilisé pour effectuer une ou plusieurs mesures parmi une mesure photométrique, fluorométrique, turbidimétrique, néphélométrique, luminimétrique et d'indice de réfraction.

15. Un procédé permettant d'effectuer des mesures d'absorbance de lumière dans un échantillon (f) à partir d'un échantillon liquide (f) en utilisant le système de soit la revendication 13, soit la revendication 14, le procédé comprenant les étapes consistant à :
introduire un échantillon (f) à partir d'un échantillon liquide (f) dans le canal de remplissage capillaire (a) et former une suspension de microparticules avec la population de microparticules (c) déposées à l'intérieur du canal de remplissage capillaire (a) par la force capillaire,
éclairer le canal de remplissage capillaire (a) par l'instrument optique à partir du point de fixation (d) ; et
détecter l'éclairage réfléchi de nouveau par les microparticules (c) par le détecteur de l'instrument optique.
